# EUROPÄISCHE PATENTSCHRIFT

(11) **EP 3 922 930 B1**
(45) Veröffentlichungstag und Bekanntmachung des Hinweises auf die Patenterteilung: **28.02.2024**
(21) Anmeldenummer: 21177558.0
(22) Anmeldetag: 03.06.2021
(51) Int. Cl.: F25B 49/02, F25B 40/00

(54) **VERFAHREN ZUM BETRIEB EINER KOMPRESSIONSKÄLTEANLAGE UND ZUGEHÖRIGE KOMPRESSIONSKÄLTEANLAGE**
COMPRESSION COOLING SYSTEM AND METHOD FOR OPERATING A COMPRESSION COOLING SYSTEM
PROCÉDÉ DE FONCTIONNEMENT D'UNE INSTALLATION DE RÉFRIGÉRATION À COMPRESSION ET INSTALLATION DE RÉFRIGÉRATION À COMPRESSION ASSOCIÉE

(30) Priorität: 09.06.2020 DE 102020115269
(43) Veröffentlichungstag der Anmeldung: 15.12.2021
(73) Patentinhaber: Stiebel Eltron GmbH & Co. KG, 37603 Holzminden (DE)
(72) Erfinder: Herrs, Martin, 37671 Höxter (DE)

(56) Entgegenhaltungen:
- EP-A2- 2 375 174
- WO-A1-2017/072324
- DE-A1-102005 001 231

## Beschreibung

Die Erfindung betrifft ein Verfahren zum Betrieb einer Kompressionskälteanlage sowie eine zugehörige Kompressionskälteanlage mit einem Kältemittel, einem Verdampfer, einem Verdichter, einem Verflüssiger, einem Drosselorgan, einem internen Wärmeübertrager zur Übertragung von Wärmeenergie des Kältemittels vor Eintritt in das Drosselorgan an das Kältemittel vor Eintritt in den Verdichter, und einer Steuereinheit zur Erfassung einer Überhitzung des Kältemittels bei Eintritt in den Verdichter, wobei die Überhitzung als eine Differenz einer Taupunkttemperatur zu einer Temperatur des Kältemittels definiert ist, und einer Regelung des Drosselorgans basierend auf der Überhitzung.

Derartige Kompressionskälteanlagen, beispielsweise in Form von Wärmepumpen, mit einem Dampfkompressionssystem in welchem ein gasförmiges Kältemittel von einem mittels der Steuereinheit, die beispielsweise einen Regler aufweist, gesteuerten Verdichter von einem Niederdruck auf einen Hochdruck verdichtet wird, sind bekannt.

Das Kältemittel wird durch den Verflüssiger getrieben, in dem es eine Heizwärme an ein in einem Wärmesenkensystem befindliches Heizmedium abgibt. Eine innere Wärme wird in einem inneren Wärmeübertrager, beispielsweise in Form eines Rekuperators, zwischen dem unter dem Hochdruck vom Verflüssiger zum Expansionsventil strömenden Kältemittel und dem vom Verdampfer zum Verdichter unter dem Niederdruck strömende Kältemittel übertragen.

Das Kältemittel wird weiter in einer Hochdruckströmungsrichtung zu einem vom Regler gesteuerten Expansionsventil geführt, in dem das Kältemittel vom Hochdruck auf den Niederdruck abhängig von einem Regelwert entspannt wird. Das auf dem Niederdruck befindliche Kältemittel verdampft in dem Verdampfer bei Aufnahme von Quellwärme.

In EP 2 375 174 A2 wird eine Wärmepumpenanordnung zum Heizen oder Kühlen eines Mediums mit einer Wärmepumpe, einer Wärmequelle, wenigstens einer Wärmesenke und wenigstens einer quellenseitig angeordneten und/oder einer senkenseitig angeordneten Umwälzpumpe vorgeschlagen, die einen Regler umfasst, der zur Regelung einer Regelgröße der Wärmepumpenanordnung auf einen vorbestimmten Nennwert ein Steuersignal zur Einstellung einer Drehzahl der Umwälzpumpe(n) ausgibt.

Aus WO 2017/072324 A1 ist eine Wärmepumpe bekannt, die einen Verdampfer umfasst, mit einem Verdampfereinlass und einem Verdampferauslass, einen Kondensator mit einem Kondensatoreinlass und einem Kondensatorauslass, einen Temperaturerhöher zum Anheben einer Temperatur einer verdampften Betriebsflüssigkeit, einem Schaltmittel zum Betreiben der Wärmepumpe in einem ersten Betriebsmodus oder einem anderen zweiten Betriebsmodus, wobei der erste Betriebsmodus ein Freikühlmodus oder Bypassmodus und wobei der zweite Betriebsmodus der Freikühlmodus oder Normalmodus ist, einer Temperatursensoreinrichtung zum Erfassen einer Temperatur in Bezug auf den Verdampfer oder den Kondensator, und einer Steuerung zum Bereitstellen eines Steuersignals basierend auf der erfassten Temperatur an den Temperaturerhöher, wenn die Wärmepumpe in dem zweiten Betriebsmodus betrieben wird, und zum Bereitstellen eines Steuersignals basierend auf der Temperatur an einen Steuerausgang, der mit einem Steuereingang einer Wärmeabfuhrvorrichtung verbindbar ist, wenn die Wärmepumpe im ersten Betriebsmodus betrieben wird.

In DE 2005 001 231 A1 wird eine Klimaanlage zur Beheizung und Kühlung eines Innenraumzuluftstroms eines Kraftfahrzeugs mit einem Kältemittelkreislauf offenbart, der einen Kältemittelverdichter zur Verdichtung von im wesentlichen gasförmigem Kältemittel auf eine hohes Druck- und Temperaturniveau, einen dem Kältemittelverdichter nachgeschalteten ersten Wärmetauscher zur Wärmeabfuhr aus dem Kältemittel, eine erste Ventileinheit sowie eine Hochdruckseite eines zweiten Wärmetauschers zur Übertragung von Wärme an das Kältemittel, auf der das Kältemittel unter Umgebungstemperatur abgekühlt wird, eine zweite Ventileinheit, die das Kältemittel entspannen kann, einen Innenraumwärmetauscher zum Bringen des Kältemittels auf Umgebungstemperatur und eine Niederdruckseite des zweiten Wärmetauschers zum Energieaustausch mit der Hochdruckseite des zweiten Wärmetauschers aufweist. Der erste Wärmetauscher ist als Kältemittel/Wärmeträgerflüssigkeits-Wärmetauscher ausgebildet, wobei die Wärmeträgerflüssigkeit in einem zweiten Kreislauf geführt ist, über den Wärme vom Kältemittelkreislauf zum Innenraumzuluftstrom übertragbar oder an die Umgebung abgebbar ist. Alle Komponenten des Kältemittelkreislaufs sind immer in einer Richtung durchströmt.

Aus DE 101 59 892 A1 ist bei einer Kältemaschine bekannt, insbesondere bei einer Wärmepumpe, einen Rekuperator zu verwenden, womit bei niedrigen Außentemperaturen die Heizleistung auf baulich einfache Weise erhöht werden soll. Hierfür ist der Rekuperator derart dimensioniert, dass er bei niedrigen Verdampfungstemperaturen wenigstens etwa 15% der Heizleistung der Wärmepumpe vom flüssigen Kältemittel auf das gasförmige Kältemittel überträgt. Ein Einspritzventil spritzt flüssiges Kältemittel in den Verdichter, so dass die Verdichtungsendtemperatur unter 120 °C bleibt.

Eine Wärmepumpenanlage mit einem Kältemittelkreislauf ist aus DE 10 2005 061 480 B3 bekannt. Sie ist mit einem Verdichter, einem ersten Wärmeübertrager, einem Drosselorgan, einem Verdampfer und einer 4-2-Wegeventileinheit zum Umschalten zwischen einer ersten (Heizen) und einer zweiten Betriebsart (Kühlen) ausgestattet. Eine Strömungsrichtung des in dem Kältemittelkreislauf befindlichen Kältemittels kann derart umgeschaltet werden kann, dass der erste Wärmeübertrager in der ersten Betriebsart zum Verflüssigen des Kältemittels, und in der zweiten Betriebsart zum Verdampfen des Kältemittels dient, und der zweite Wärmeübertrager in der ersten Betriebsart zum Verdampfen des Kältemittels und in der zweiten Betriebsart zum Verflüssigen des Kältemittels dient, wobei der erste Wärmeübertrager im Kältemittelkreislauf so verschaltet ist, dass er in den beiden Betriebsarten Heizen und Kühlen als Gegenstrom-Wärmeübertrager arbeitet.

Es ist bekannt, dass die Erreichung einer bestimmten Wärmesenkentemperatur, beispielsweise einer Vorlauftemperatur oder einer Rücklauftemperatur für einen Heizkreis, in etwa mit einem Druck des Kältemittels, das sich im Verflüssiger einstellt, korrespondiert. Abhängig von der Ausgestaltung des Kältekreises korrespondiert dieser auch Hochdruck genannte Druck des Kältemittels eher mit der Wärmesenken-Rücklauftemperatur oder der Wärmesenken-Vorlauftemperatur, abhängig beispielsweise von einer Unterkühlung des Kältemittels in einem internen Wärmeübertrager wie einem Rekuperator. Der Hochdruck muss während des Betriebs der Kompressionskälteanlage allerdings innerhalb der zulässigen Grenzen liegen.

Aufgabe der Erfindung ist es, ein Regelverfahren für die eingangs genannte Kompressionskälteanlage vorzuschlagen, das einen optimierten Betrieb bei gleichzeitiger Einhaltung der Hochdruckgrenzen der Kompressionskälteanlage zu ermöglichen.

Gelöst wir die Aufgabe durch die Verfahrensmerkmale des Anspruchs 1 sowie die Vorrichtungsmerkmale des Anspruchs 8.

Demnach wird gemäß einem ersten Aspekt ein Verfahren zum Regeln einer Kompressionskälteanlage mit einem Kältekreis mit einem Kältemittel, einem Verdampfer, einem Verdichter, einem Verflüssiger, einem Drosselorgan, einem internen Wärmeübertrager zur Übertragung von Wärmeenergie des Kältemittels vor Eintritt in das Drosselorgan an das Kältemittel vor Eintritt in den Verdichter, einem Wärmesenkenkreis, der zum Wärmeübertrag mit dem Verflüssiger des Kältekreises ausgebildet ist, einer wärmesenkenseitigen Medienfördereinrichtung und einer Steuereinheit zur Regelung einer Temperaturdifferenz zwischen einer Vorlauftemperatur und einer Rücklauftemperatur des Wärmesenkenkreises, genannt Temperaturspreizung, mittels der Medienfördereinrichtung, vorgeschlagen. Das Verfahren umfasst die folgenden Schritte: a) Bilden eines Sockelwertes für die Temperaturspreizung, wobei der Sockelwert eine Effizienz des Kältekreises gewährleistet, b) Bilden wenigstens eines Korrekturwertes, wobei der oder die Korrekturwerte den Betrieb des Kältekreises in einem zulässigen Betriebsbereich gewährleisten, c) Addition des Sockelwertes und des oder der Korrekturwerte, um einen Sollwert für die Temperaturspreizung zu erhalten und d) Regeln der Medienfördereinrichtung auf den Sollwert für die Temperaturspreizung.

Der Wärmesenkenkreis ist demnach in diesem Sinne zur Wärmeübertragung zwischen einem primären Wärmeträgermedium, beispielsweise ein Heizkreismedium mit Rücklauftemperatur und Vorlauftemperatur, und einem sekundären Wärmeträgermedium, beispielsweise eine Raumluft im Heizbetrieb, Warmwasser im Warmwasserladebetrieb, mittels eines Wärmeübertragers, beispielsweise eine Fußbodenheizung, ein Radiator etc. im Heizbetrieb und ein Warmwasserladewärmeübertrager im Warmwasserladebetrieb ausgebildet.

Der Schritt des Bildens wenigstens eines Korrekturwertes umfasst vorzugsweise: e) Bestimmen eines Druckes des Kältemittel in einem Hochdruckabschnitt des Kältekreises, genannt Hochdruck, f) Bestimmen eines maximal zulässigen Hochdruckes im aktuellen Arbeitspunkt der Kompressionskälteanlage, g) Bestimmen des Korrekturwertes in Abhängigkeit eines Abstandes des Hochdruckes von dem maximal zulässigen Hochdruck.

Vorzugsweise wird der Sockelwert empirisch durch Betrieb der Kompressionskälteanlage an wenigstens einem Normbetriebspunkt gebildet, wobei während des Betriebes an dem Normbetriebspunkt eine Variation der Temperaturspreizung durchgeführt wird.

Zur Festlegung eines Temperaturspreizungs - Sockelwertes wird vorzugsweise für Betriebspunkte mit genügendem Abstand zum Hochdruckgrezwert wie folgt vorgegangen:
Die Kompressionskälteanlage in verschieden Arbeitspunkten mit nacheinander mit variierter Temperaturspreizung betrieben und auslegungsrelevanten Kenngrößen ( KK - Wirkungsgrad, Reglerstabilität Temperaturdifferenzegler, Erfassungsgenauigkeit des Volumenstromsensors ( relevant für die Wärmemengenmessung), Volumenstrom ( minimaler Grenzwert gewährleistet Durchströmung verteilter Heizkreise ) durchgeführt und dann ein geeigneter Sockelwert als Kompromiss unter gewichteter Einbeziehung o.g. Kriterien festgelegt. Hierbei werden insbesondere die Erfüllung der Kriterien für Betriebspunkte, in welchen die WP voraussichtlich häufiger betrieben wird, stärker gewichtet als für Betriebspunkte, in welchen die WP voraussichtlich seltener betrieben wird.

Die Elektronik kann dann die vorgegebene, variierende Spreizung ausregeln und auf Basis des Verhaltens des Kältekreises bspw. von Regelschwingungen, auf einen geeigneten Sockelwert schließen, wie oben beschrieben.

Vorzugsweise wird der Sockelwert alternativ oder zusätzlich modellbasiert abgeleitet, wobei für die Ableitung des modellbasierten Sockelwertes insbesondere eine finite Elemente Simulation zum Erhalt von Abhängigkeiten anhand von Messdaten angewandt wird.

In dieser Form wird die Physik anhand von Messdaten abgebildet und Abhängigkeiten, Reglerstabilitäten etc. basierend darauf erhalten.

Vorzugsweise ist der Sollwert für die Temperaturspreizung bis zu einem Schwellwert der Vorlauftemperatur des Wärmesenkenkreises konstant und entspricht insbesondere dem Sockelwert.

Vorzugsweise steigt der Sollwert für die Temperaturspreizung über dem Schwellwert der Vorlauftemperatur als Funktion der Vorlauftemperatur an. Hiermit wird berücksichtigt, dass hohe Vorlauftemperaturen höhere Spreizungen erfordern, die für niedrigere Vorlauftemperaturen, beispielsweise unterhalb von 60°C, nicht erforderlich sind.

Vorzugsweise enthalten die Korrekturwerte ferner wenigstens einen der folgenden Korrekturwerte:
- Korrekturwert zur modellbasierten Einhaltung einer oberen Vorlauftemperatur-Betriebsgrenze, welcher unterhalb einer Grenz-Vorlauftemperatur den Wert = 0 hat und oberhalb der Grenz-Vorlauftemperatur proportional zur Differenz zu der Grenz-Vorlauftemperatur im Wert ansteigt;
- Korrekturwert zur modellbasierten Einhaltung einer unteren Vorlauftemperatur-Betriebsgrenze, welcher oberhalb einer weiteren Grenz-Vorlauftemperatur den Wert = 0 hat und unterhalb der weiteren Grenz-Vorlauftemperatur proportional zur Differenz zu der weiteren Grenz-Vorlauftemperatur im Wert ins Negative absinkt;
- Korrekturwert, welcher mit Hilfe des Sockelwertes für den Sollwert der Temperaturdifferenz des Wärmesenkenmediums multipliziert mit einem Steuerfaktor eines Arbeitsbereichsreglers gebildet wird;
- Korrekturwert, welcher nach Berechnung nach einem oder beider der oben genannten Abhängigkeiten auf einen minimalen und / oder maximalen Grenzwert begrenzt wird.

Vorzugsweise regelt die Steuerung den Kältekreis derart, dass das Kältemittel bei Austritt aus dem Verflüssiger eine Unterkühlung kleiner 3K, vorzugsweise kleiner 2K und besonders bevorzugt kleiner 1K aufweist.

Im Idealfall hat das Kältemittel bei Austritt aus dem Verflüssiger keine Unterkühlung, aber ist vollständig verflüssigt. Damit wird ein optimaler Wirkungsgrad erreicht.

Die Aufgabe wird erfindungsgemäß ferner durch eine Kompressionskälteanlage mit einem Kältekreis mit einem Kältemittel, einem Verdampfer, einem Verdichter, einem Verflüssiger, einem Drosselorgan, einem internen Wärmeübertrager zur Übertragung von Wärmeenergie des Kältemittels vor Eintritt in das Drosselorgan an das Kältemittel vor Eintritt in den Verdichter, einem Wärmesenkenkreis, der zum Wärmeübertrag mit dem Verflüssiger des Kältekreises ausgebildet ist, einer wärmesenkenseitigen Medienfördereinrichtung und einer Steuereinheit zur Regelung einer Temperaturdifferenz zwischen einer Vorlauftemperatur und einer Rücklauftemperatur des Wärmesenkenkreises, genannt Temperaturspreizung, mittels der Medienfördereinrichtung, gelöst.

Die Steuereinheit ist ausgebildet zum: a) Bilden eines Sockelwertes für die Temperaturspreizung, wobei der Sockelwert eine Effizienz des Kältekreises gewährleistet, b) Bilden wenigstens eines Korrekturwertes, wobei der oder die Korrekturwerte den Betrieb des Kältekreises in einem zulässigen Betriebsbereich gewährleisten, c) Addition des Sockelwertes und des oder der Korrekturwerte zu einem Sollwert für die Temperaturspreizung und d) Regeln der Medienfördereinrichtung auf den Sollwert für die Temperaturspreizung.

Vorzugsweise weist das Kältemittel einen Temperaturglide auf, wobei als Kältemittel insbesondere R454C, verwendet wird.

Die Aufgabe wird ferner durch eine Wärmepumpe mit einer erfindungsgemäßen Kompressionskälteanlage gelöst.

Weitere Vorteile und besondere Ausgestaltungen werden nachfolgend mit Verweis auf die beigefügten Figuren beschrieben.

Die Figuren zeigen ein Ausführungsbeispiel:
- Fig. 1: Wärmepumpe 100 mit einem Dampfkompressionskreislauf 200

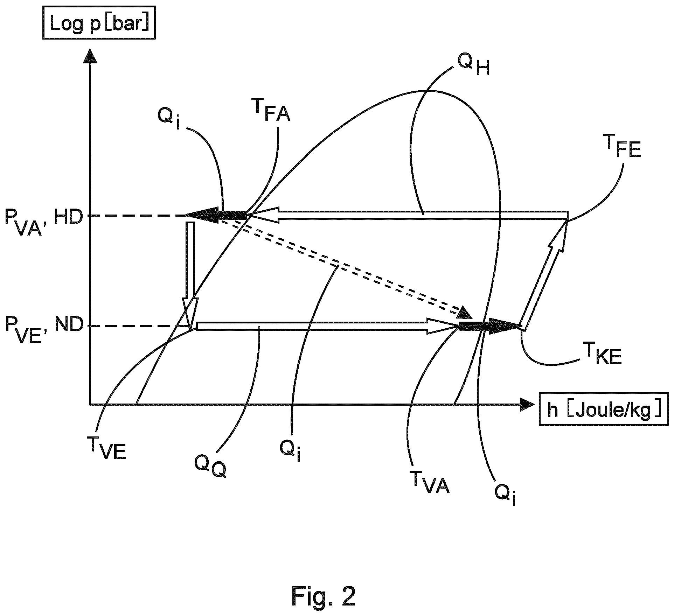

- Fig. 2: log p / h - Diagramm des Dampfkompressionsprozesses mit Rekuperator 250
- Fig. 3: zeigt ein Flussdiagramm eines erfindungsgemäßen Verfahrens.

- Fig. 4: zeigt schematisch und exemplarisch ein Diagramm eines Verlaufs des Sockelwertes der Spreizung

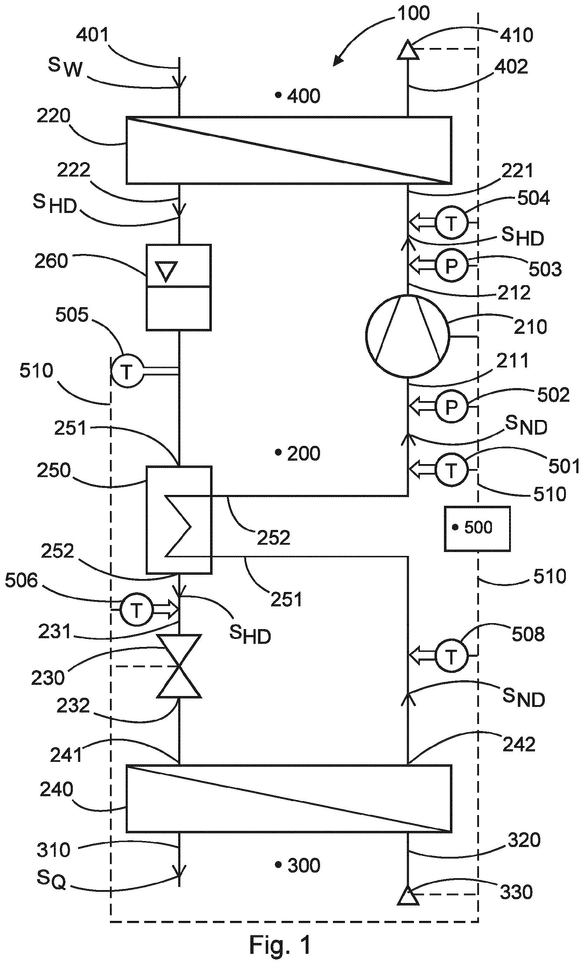

Fig. 1 zeigt schematisch und exemplarisch eine Wärmepumpe 100. Die Wärmepumpe 100 besteht im Wesentlichen aus einem eine Kompressionskälteanlage bildenden Dampfkompressionssystem 200, welches folgende Komponenten enthält:
- Einen Verdichter 210 zum Verdichten des überhitzten Kältemittels,
- einen Verflüssiger 220, mit einem kältemittelseitigem Verflüssigereintritt 221 und einem Verflüssigeraustritt 222 zur Übertragung von Wärmeenergie Q_{H} aus dem Dampfkompressionssystem 200 an ein Heizmedium eines Heizsystems 400, mit einem Heizmediumeintritt 401, einem Heizmediumaustritt 402 und einer Heizmediumpumpe 410, zu einer Gebäudeheizung oder ein System zur Warmwassererhitzung,
- vorteilhaft einen Kältemittelsammler 260, welcher als Kältemittelreservoir zum Ausgleich von betriebsbedingungsabhängig unterschiedlich hohen Kältemittelmengenbedarfen verwendet wird,
- ein als Expansionsventil ausgebildetes Drosselorgan 230 zum Expandieren des Kältemittels,
- einen Verdampfer 240, mit einem Verdampfereinlass 241, zur Übertragung von Quellenenergie Q_{Q} aus einem Wärmequellensystem 300, mit einem Wärmequelleinlass 320 und einem Wärmequellauslass 310, wobei das Wärmequellsystem 300 insbesondere ein Solesystem sein kann, welches Wärmeenergie Q_{Q} aus dem Erdreich aufnimmt oder ein Luftsystem, welches Wärmeenergie Q_{Q} aus der Umgebungsluft aufnimmt und an das Dampfkompressionssystem 200 abgibt oder eine beliebige andere Wärmequelle,
- einen Rekuperator als Beispiel eines internen Wärmeübertragers 250, welcher dazu bestimmt ist, innere Wärmeenergie Qᵢ zwischen dem vom Verflüssiger 220 zum Expansionsventil 230 strömenden Kältemittel auf das vom Verdampfer 240 zum Verdichter 210 strömende Kältemittel zu übertragen und
- ein Kältemittel, insbesondere ein Kältemittelgemisch aus wenigsten zwei Stoffen oder zwei Kältemitteln welches in einer Strömungsrichtung S_{HD} und S_{ND} durch den Dampfkompressionskreis 200 strömt, wobei im Dampfkompressionskreislauf 200 Kältemitteldampf durch den Verdichter 210 auf einen Hochdruck HD gebracht wird und zu einem Verflüssiger 220 geführt ist, wobei ein Hochdruckpfad mit der Hochdruckströmungsrichtung S_{HD} vom Verdichter 210 bis zum Expansionsventil 230 gebildet ist. Nach dem Expansionsventil 230 bis zum Verdichter 210 ist ein Niederdruckpfad mit einer Niederdruckströmungsrichtung S_{ND} des Kältemittels gebildet, in dem der Verdampfer 240 liegt.

Die folgend aufgelisteten Aktoren sind vorteilhaft zumindest teilweise mit dem Regler über eine Datenverbindung 510, die per Kabel, Funk oder andere Technologien erfolgen kann, verbunden: Verdichter 210, Heizmediumpumpe 410, Solepumpe 330, Expansionsventil 230, Verdichtereintrittstemperatursensor 501, Niederdrucksensor 502, Hochdrucksensor 503 Heißgastemperatursensor 504, Rekuperatoreintrittstemperatursensor 505, Rekuperatoraustrittstemperatursensor 506 und/oder Verdampferaustrittstemperatursensor 508. Zusätzlich oder alternativ kann ein in der Fig. 1 nicht gezeigter Verdampfereintrittstemperatursensor die Temperatur am Verdampfereinlass 241 bestimmen.

In dem in Fig. 1 gezeigten Beispiel ist die Wärmepumpe 100 als Sole-Wärmepumpe gezeigt. Natürlich sind analoge Betrachtungen und Vorteile mit Luft-/Wasser-Wärmepumpen erreichbar. Insbesondere bei Luft-Wärmepumpen ist anstelle des Solekreises mit Solepumpe 330 ein Ventilator/Lüfter als Wärmequelle angeordnet.

Der Verdichter 210 dient zur Kompression des überhitzten Kältemittels von einem Eintrittsanschluss 211 auf einen Verdichteraustrittsdruck P_{Va} bei einer Verdichteraustrittstemperatur entsprechend der Heißgastemperatur am Verdichteraustritt 212. Der Verdichter 210 enthält üblicher Weise eine Antriebseinheit mit einem Elektromotor, eine Kompressionseinheit und vorteilhaft kann der Elektromotor drehzahlvariabel betrieben werden. Die Kompressionseinheit kann als Rollkolbeneinheit, Scrolleinheit oder anders ausgeführt sein. Am Verdichteraustritt 212 ist das komprimierte überhitzte Kältemittel beim Verdichteraustrittsdruck P_{Va} auf einer höheren Drucklage, insbesondere einem Hochdruck HD, als am Eintrittsanschluss 211 mit einem Verdichtereintrittsdruck P_{Ve}, insbesondere einem Niederdruck ND, bei einer Verdichter Eintrittstemperatur T_{VE}, was den Zustand der Kältemitteltemperatur am Eintrittsanschluss 211 bei Eintritt in eine Kompressionskammer beschreibt.

Im Verflüssiger 220 erfolgt die Übertragung von Wärmeenergie Q_{H} vom Kältemittel des Dampfkompressionssystem 200 an ein Heizmedium des Wärmesenkensystems 400. Zunächst findet im Verflüssigter 220 die Enthitzung des Kältemittels statt, wobei überhitzter Kältemitteldampf durch eine Temperaturreduzierung einen Teil seiner Wärmeenergie an das Heizmedium des Wärmesenkensystems 400 überträgt.

Nach der Enthitzung des Kältemitteldampfes erfolgt vorteilhaft im Verflüssiger 220 eine weitere Wärmeübertragung Q_{H} durch Kondensation des Kältemittels beim Phasenübergang von der Gasphase des Kältemittels auf die Flüssigphase des Kältemittels. Dabei wird weitere Wärme Q_{H} vom Kältemittel aus dem Dampfkompressionssystem 200 an das Heizmedium des Wärmesenkensystems 400 übertragen.

Der sich im Verflüssiger 220 einstellende Hochdruck HD des Kältemittels korrespondiert im Betrieb des Verdichters 210 in etwa mit einem Kondensationsdruck des Kältemittels bei einer Heizmediumtemperatur T_{WS} im Wärmesenkensystem.

Das Heizmedium, insbesondere Wasser, wird mittels einer Heizmediumpumpe 410 durch das Wärmesenkensystem 400 in einer Richtung SW durch den Verflüssiger 220 gefördert, dabei wird die Wärmeenergie Q_{H} vom Kältemittel auf das Heizmedium übertragen.

Im nachfolgenden Sammler 260 wird aus dem Verflüssiger 220 austretendes Kältemittel gespeichert, welches abhängig vom Betriebspunkt des Dampfkompressionskreises 200 nicht in das zirkulierende Kältemittel eingespeist werden soll. Wird aus dem Verflüssiger 220 mehr Kältemittel eingespeist, als durch das Expansionsventil 230 weitergeleitet wird, füllt sich der Sammler 260, anderenfalls wird er leerer oder entleert.

Im nachfolgenden Rekuperator 250, der auch als interner Wärmeübertrager bezeichnet werden kann, wird interne Wärmeenergie Qᵢ vom unter dem Hochdruck HD stehenden Kältemittel, welches vom Verflüssiger 220 zum Expansionsventil 230 in einer Hochdruck-Strömungsrichtung S_{HD} strömt, auf das unter dem Niederdruck ND strömende Kältemittel übertragen, welches vom Verdampfer zum Verdichter in einer Niederdruckströmungsrichtung S_{ND} strömt, übertragen. Dabei wird das vom Verflüssiger zum Expansionsventil 230 strömende Kältemittel in vorteilhafter Weise unterkühlt.

Zunächst strömt das Kältemittel durch einen Expansionsventileintritt 231 in das Expansionsventil ein. Im Expansionsventil 230 erfolgt eine Drosselung des Kältemitteldruckes vom Hochdruck HD auf den Niederdruck ND, indem das Kältemittel vorteilhaft eine Düsenanordnung oder Drossel mit einem vorteilhaft variablen Öffnungsquerschnitt passiert, wobei der Niederdruck vorteilhaft in etwa ein Saugdruck des Verdichters 210 entspricht. Anstelle eines Expansionsventils 230 kann auch eine andere beliebige Druckminderungseinrichtung eingesetzt sein. Vorteilhaft sind Druckminderungsrohre, Turbinen oder andere Entspannungsvorrichtungen.

Ein Öffnungsgrad des Expansionsventils 230 wird durch einen Elektromotor, der üblicherweise als Schrittmotor ausgeführt ist eingestellt, welcher durch die Steuereinheit oder Regelung 500 gesteuert wird. Dabei wird der Niederdruck ND beim Expansionsventilaustritt 232 des Kältemittels aus dem Expansionsventil 230 so gesteuert, dass der sich einstellende Niederdruck ND des Kältemittels im Betrieb des Verdichters 210 in etwa mit dem Verdampfungsdruck des Kältemittels mit der Wärmequellenmedientemperatur T_{WQ} korrespondiert. Vorteilhaft wird die Verdampfungstemperatur des Kältemittels wenige Kelvin unterhalb der Wärmequellen-Medientemperatur T_{WQ} liegen, damit die Temperaturdifferenz eine Wärmeübertragung treibt.

Im Verdampfer erfolgt eine Übertragung von Verdampfungswärmeenergie Qv vom Wärmequellenfluid des Wärmequellensystems 300, welches ein Solesystem, ein Erdwärmesystem zur Nutzung von Wärmeenergie Q_{Q} aus dem Erdreich, ein Luftsystem zur Nutzung von Energie Q_{Q} aus der Umgebungsluft oder eine andere Wärmequelle sein, die die Quellenergie Q_{Q} an das Dampfkompressionssystem 200 abgibt.

Das in den Verdampfer 240 einströmende Kältemittel reduziert beim Durchströmen des Verdampfers 240 durch Wärmeaufnahme Q_{Q} seinen Nassdampfanteil und verlässt den Verdampfer 240 vorteilhaft mit einem geringen Nassdampfanteil oder vorteilhaft auch als überhitztes gasförmiges Kältemittel. Das Wärmequellenmedium wird mittels einer Solepumpe 330 bei Sole - Wasser-Wärmepumpen oder einem Außenluftventilator bei Luft/Wasser-Wärmepumpen durch den Wärmequellenmedienpfad des Verdampfers 240 gefördert, wobei beim Durchströmen des Verdampfers dem Wärmequellenmedium die Wärmeenergie Q_{Q} entzogen wird.

Im Rekuperator 250 wird Wärmeenergie Qᵢ zwischen dem vom Verflüssiger 220 zum Expansionsventil 230 strömenden Kältemittel auf das vom Verdampfer 240 zum Verdichter 210 strömende Kältemittel übertragen, wobei das vom Verdampfer 240 zum Verdichter 210 strömende Kältemittel insbesondere weiter überhitzt.

Dieses überhitzte Kältemittel, welches mit einer Überhitzungstemperatur T_{Ke} aus dem Rekuperator 250 austritt, wird zum Kältemitteleintrittsanschluss 211 des Verdichters 210 geleitet.

Der Rekuperator 250 ist im Dampfkompressionskreis 200 eingesetzt, um den Gesamt - Wirkungsgrad als Quotient aus abgegebener Heizleistung Q_{H} und aufgenommener elektrischer Leistung Pₑ zum Antrieb des Verdichtermotors zu erhöhen.

Zu diesem Zweck wird dem Kältemittel, welches im Verflüssiger 220 Wärmeenergie Q_{H} auf einem wärmesenkenseitigen Temperaturniveau an das Heizmedium abgibt, im Hochdruckpfad des Rekuperators 250 durch Unterkühlung weitere Wärmeenergie Qᵢ entzogen.

Der innere Energiezustand des Kältemittels beim Eintritt in den Verdampfer 240 ist durch diesen Wärmeentzug Qᵢ reduziert, sodass das Kältemittel bei gleichem Verdampfungstemperaturniveau mehr Wärmeenergie Q_{Q} aus der Wärmequelle 300 aufnehmen kann.

Anschließend wird dem Kältemittel, nach dem Verdampferaustritt 242 aus dem Verdampfer 240, im Niederdruckpfad bei Niederdruck ND und bei einer Niederdrucktemperatur entsprechend einer Verdampferaustrittstemperatur T_{Va} am Eintritt in den Rekuperator 250 die im Hochdruckpfad entzogene Wärmeenergie Qᵢ wieder zugeführt. Die Zuführung der Energie bewirkt vorteilhat eine Reduzierung des Nassdampfanteils auf einen Zustand ohne Nassdampfanteil. Die Überhitzung wird durch weitere Energiezuführung sichergestellt.

Des Weiteren sind zur Erfassung des Betriebszustandes des Dampfkompressionssystems 200 vorteilhaft folgende Sensoren angeordnet, mit denen insbesondere zur Absicherung und Optimierung der Betriebsbedingungen des Dampfkompressionssystems 200 insbesondere bei Betriebszustandsänderungen eine modellbasierte Vorsteuerung umgesetzt ist.

Einerseits erfolgt vorteilhaft mit Hilfe der durch Sensoren erfassten Prozesswerte eine Absicherungen bezüglich zulässiger Arbeitsbereiche der Komponenten wie insbesondere dem Verdichter 210, andererseits erfolgen basierend auf den Sensordaten modellbasierte Vorsteuerungen insbesondere einer Drehzahl des Verdichters 210 und/oder einem Ventilöffnungsgrad des Expansionsventils, so dass die Regler zur Ausregelung einer sich dennoch, durch die Vorsteuerung aber kleineren, Regelabweichung nur noch kleinere Korrekturen durchführen muss:
- Ein Hochdrucksensor 503 vorteilhaft zur Erfassung des Hochdrucks HD des Kältemittels am Verdichteraustritt 212 oder zwischen dem Verdichteraustritt 212 und dem Expansionsventileintritt 231,
- ein Heißgastemperatursensor 504 vorteilhaft zur Erfassung einer Heißgastemperatur T_{HG} des Kältemittels am Verdichteraustritt 212, oder im Kältekreisabschnitt zwischen dem Verdichteraustritt 212 und dem Verflüssigereintritt 221,
- ein Innentemperatursensor 506 vorteilhaft zur Erfassung der Innentemperatur T_{Ie} des Kältemittels zwischen dem hochdruckseitigem internen Rekuperatorauslass 252 des Kältemittels aus dem Rekuperator 250 und dem Expansionsventileitritt 231. Die Innentemperatur ist vorteilhaft auch als "Rekuperatoraustrittstemperatur Hochdruckpfad" benannt und
- vorteilhaft ein Rekuperatorinnentemperatursensor 505. Der Rekuperatorinnentemperatursensor 505 erfasst vorteilhaft Verflüssigeraustrittstemperatur T_{FA} des Kältemittels in der Strömungsrichtung am Verflüssigeraustritt oder dem hochdruckseitigen Rekuperatoreintritt und daher wird vorteilhaft die Verflüssigeraustrittstemperatur T_{FA} vom Rekuperatorinnentemperatursensor 505 gemessen.

Die folgenden Sensoren sind insbesondere für die Durchführung des erfindungsgemäßen Verfahrens vorteilhaft:
- Ein Niederdrucksensor 502 zur Erfassung des Niederdrucks ND des Kältemittels am Verdichtereintritt 211, oder zwischen dem Expansionsventil 230 und dem Verdichtereintritt 211,
- ein Verdampferaustrittstemperatursensor 508 zur Erfassung der Verdampferaustrittstemperatur T_{Va} des Kältemittels am Verdampferaustritt 242 oder zwischen dem Verdampferaustritt 242 und dem niederdruckseitigen Eintritt des Kältemittels in den Rekuperatoreinlass 251 des Rekuperators 250 und
- ein Niederdrucktemperatursensor 501 misst vorteilhaft eine Verdichtereintrittstemperatur oder dient vorteilhaft zur Erfassung der Kältemittelniederdrucktemperatur T_{ND} oder vorteilhaft einer Verdichtereintrittstemperatur T_{KE} am Verdichtereintritt 211, oder zwischen dem niederdruckseitigem Rekuperatorauslass 252 des Kältemittels aus dem Rekuperator 250 und dem Verdichtereintritt 211.

Die Prozessgröße, welche einen maßgeblichen Einfluss auf den Gesamt - Wirkungsgrad des Dampfkompressionskreises 200 als Quotient zwischen der vom Dampfkompressionskreis 200 übertragenen Heizleistung Q_{H} zu einer vom Verdichter 210 aufgenommenen elektrischen Leistung Pₑ hat, ist die Überhitzung des Kältemittels am Verdichtereintritt 211. Zur Einhaltung zulässiger Verdichter - Betriebsbedingungen werden vorteilhaft allerdings Beschränkungen bezüglich des erlaubten Überhitzungsbereiches des Kältemittels am Verdichtereintritt eingehalten. Zu niedrige Überhitzungen gefährden insbesondere die Schmiereigenschaften des Maschinenöls, zu hohe Überhitzungen bewirken insbesondere eine zu hohe Heißgastemperatur.

Die Überhitzung beschreibt die Temperaturdifferenz zwischen der erfassten Verdichtereintrittstemperatur T_{KE} des Kältemittels und der Verdampfungstemperatur des Kältemittels bei gesättigtem Dampf.

Vorzugsweise wird die Verdichtereintrittsüberhitzung derart geregelt, dass kein Kondensat durch Taupunktunterschreitung des in der Umgebungsluft enthaltenden Wasserdampfanteils an Komponenten des Kältekreises insbesondere im Abschnitt zwischen Kältemittelaustritt des Rekuperators 252 und Verdichtereintritt 211 ausfällt. Der Kältekreisabschnitt zwischen Verdampferaustritt 242 und Rekuperatoreintritt 251 ist zwar üblicherweise kälter, weil dieser typischerweise nur ein kurzer Rohrabschnitt ist, ist eine bessere Isolierung im Vergleich zu dem Abschnitt zwischen Kältemittelaustritt des Rekuperators 252 und Verdichtereintritt 211 möglich. Beispielsweise sitzt an der Stelle des Verdichtereintritts 211 am Verdichter der Kältemittelabscheider, der geschützt werden soll. Dieser kann schlecht eingehaust werden, so dass hier die Temperatur so hochgehalten werden soll, dass nichts kondensiert. Die Problematik der Kondensation tritt auf der Hochdruckseite im Regelfall nicht auf. Auch die Passage zwischen hochdruckseitigem Rekuperatoraustritt 252 und Eintritt in das Expansionsventil 231 kühlt regelmäßig in Abhängigkeit des Betriebspunktes bei idealen Wärmeübertragungsbedingungen im Rekuperator 250 auf das Temperaturniveau des Kältemittels am Verdampferaustritt 242 ab. Da aber auch diese Passage typischerweise kurz ist und man kann sie sehr gut isolieren kann, ist auch dieser Abschnitt im Regelfall nicht problematisch. Es sollte jedoch beachtet werden, dass das erfindungsgemäße Verfahren einen Kondensatabfall grundsätzlich über den gesamten Kreislauf der Wärmepumpe verhindern kann.

Vorzugsweise wird die Verdichtereintrittsüberhitzung derart geregelt, dass kein Kondensat durch Taupunktunterschreitung des in der Umgebungsluft enthaltenden Wasserdampfanteils an Komponenten des Kältekreises insbesondere im Abschnitt zwischen Kältemittelaustritt des Rekuperators 252 und Verdichtereintritt 211 ausfällt. Der Kältekreisabschnitt zwischen Verdampferaustritt 242 und Rekuperatoreintritt 251 ist zwar üblicherweise kälter, weil dieser typischerweise nur ein kurzer Rohrabschnitt ist, ist eine bessere Isolierung im Vergleich zu dem Abschnitt zwischen Kältemittelaustritt des Rekuperators 252 und Verdichtereintritt 211 möglich. Beispielsweise sitzt an der Stelle des Verdichtereintritts 211 am Verdichter der Kältemittelabscheider, der geschützt werden soll. Dieser kann schlecht eingehaust werden, so dass hier die Temperatur so hochgehalten werden soll, dass nichts kondensiert. Die Problematik der Kondensation tritt auf der Hochdruckseite im Regelfall nicht auf. Auch die Passage zwischen hochdruckseitigem Rekuperatoraustritt 252 und Eintritt in das Expansionsventil 231 kühlt regelmäßig in Abhängigkeit des Betriebspunktes bei idealen Wärmeübertragungsbedingungen im Rekuperator 250 auf das Temperaturniveau des Kältemittels am Verdampferaustritt 242 ab. Da aber auch diese Passage typischerweise kurz ist und man kann sie sehr gut isolieren kann, ist auch dieser Abschnitt im Regelfall nicht problematisch. Es sollte jedoch beachtet werden, dass das erfindungsgemäße Verfahren einen Kondensatabfall grundsätzlich über den gesamten Kreislauf der Wärmepumpe verhindern kann.

Wenn - zum Zwecke eines Zahlenbeispiels - ein Verdampfungstemperaturniveau von ca. -10°C angenommen wird und die Temperatur am Soleeintritt 330 bei etwa -10°C, am Soleaustritt 310 etwa -13°C und am Verdichtereintritt 5°C beträgt, beträft die Überhitzung 15K.

Vorteilhaft sind bei vielen Anlagen Raumtemperatursensor und Raumfeuchtesensor, die eine genaue Bestimmung der Auskondensierungsbedingungen der Luft ermöglicht, bspw. liegt bei 21°C und 60% rel. Feuchte die Kondensationstemperatur im Bereich von 13°C. Unter diesen Bedingungen findet also, so lange die Rohrtemperatur über 13°C zuzüglich gegebenenfalls einen Puffer, bspw. 1K, keine Kondensation statt.

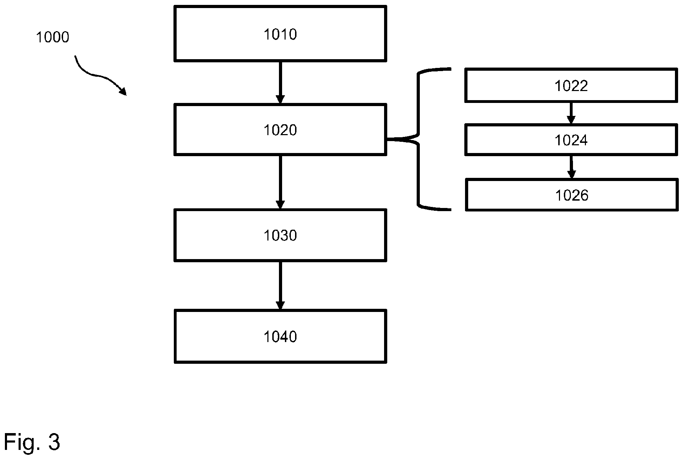

Fig. 3 zeigt schematisch und exemplarisch ein Flussdiagramm eines erfindungsgemäßen Verfahrens 1000 zum Regeln einer erfindungsgemäßen Kompressionskälteanlage 200.

In einem Schritt 1010 wird ein Sockelwert für die Temperaturspreizung gebildet, wobei der Sockelwert eine Effizienz des Kältekreises gewährleistet.

In einem Schritt 1020 wird wenigstens ein Korrekturwert gebildet, wobei der oder die Korrekturwerte den Betrieb des Kältekreises in einem zulässigen Betriebsbereich gewährleisten. Insbesondere umfasst der Schritt 1020 folgende Teilschritte:
- Einen Teilschritt 1022 des Bestimmens eines Druckes des Kältemittel in einem Hochdruckabschnitt des Kältekreises, genannt Hochdruck,
- Einen Teilschritt 1024 des Bestimmens eines maximal zulässigen Hochdruckes im aktuellen Arbeitspunkt der Kompressionskälteanlage,
- Einen Teilschritt 1026 des Bestimmens des Korrekturwertes in Abhängigkeit eines Abstandes des Hochdruckes von dem maximal zulässigen Hochdruck.

Anschließend wird in einem Schritt 1030 der Sockelwert und der oder die Korrekturwerte zu einem Sollwert für die Temperaturspreizung addiert.

Die Medienfördereinrichtung 410 wird dann in einem Schritt 1040 auf den Sollwert für die Temperaturspreizung geregelt.

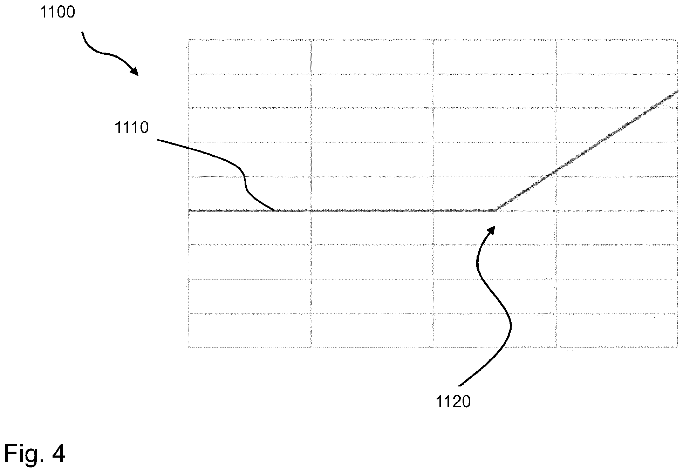

Fig. 4 zeigt schematisch und exemplarisch ein Diagramm 1100 eines Verlaufs 1110 des Sockelwertes der Spreizung auf der vertikalen Achse über die Vorlauftemperatur auf der horizontalen Achse. Bis zu einem Schwellwert 1120 zeigt der Verlauf der Spreizung einen konstanten Verlauf und nimmt anschließend mit steigender Vorlauftemperatur zu. Der Zusammenhang kann wie dargestellt linear oder auch exponentiell oder gemäß einer anderen Funktion sein.

## Patentansprüche

1. Verfahren zum Regeln einer Kompressionskälteanlage (200) mit
- einem Kältekreis mit
- einem Kältemittel,
- einem Verdampfer (240),
- einem Verdichter (210),
- einem Verflüssiger (220),
- einem Drosselorgan (230),
- einem internen Wärmeübertrager (250) zur Übertragung von Wärmeenergie des Kältemittels vor Eintritt in das Drosselorgan (230) an das Kältemittel vor Eintritt in den Verdichter (210),
- einem Wärmesenkenkreis (400), der zum Wärmeübertrag mit dem Verflüssiger (220) des Kältekreises ausgebildet ist,
- einer wärmesenkenseitigen Medienfördereinrichtung (410) und
- einer Steuereinheit (500) zur Regelung einer Temperaturdifferenz zwischen einer Vorlauftemperatur und einer Rücklauftemperatur des Wärmesenkenkreises (400), genannt Temperaturspreizung, mittels der Medienfördereinrichtung (410),
wobei das Verfahren die folgenden Schritte umfasst:
- Bilden (1010) eines Sockelwertes für die Temperaturspreizung, wobei der Sockelwert eine Effizienz des Kältekreises gewährleistet,
- Bilden (1020) wenigstens eines Korrekturwertes, wobei der oder die Korrekturwerte den Betrieb des Kältekreises in einem zulässigen Betriebsbereich gewährleisten,
- Addition (1030) des Sockelwertes und des oder der Korrekturwerte, um einen Sollwert für die Temperaturspreizung zu erhalten, und
- Regeln (1040) der Medienfördereinrichtung (410) auf den Sollwert für die Temperaturspreizung.

2. Verfahren nach Anspruch 1, wobei der Schritt des Bildens wenigstens eines Korrekturwertes umfasst:
- Bestimmen (1022) eines Druckes des Kältemittel in einem Hochdruckabschnitt des Kältekreises, genannt Hochdruck,
- Bestimmen (1024) eines maximal zulässigen Hochdruckes im aktuellen Arbeitspunkt der Kompressionskälteanlage,
- Bestimmen (1026) des Korrekturwertes in Abhängigkeit eines Abstandes des Hochdruckes von dem maximal zulässigen Hochdruck.

3. Verfahren nach einem der vorstehenden Ansprüche, wobei
- der Sockelwert empirisch durch Betrieb der Kompressionskälteanlage an wenigstens einem Normbetriebspunkt gebildet wird, wobei während des Betriebes an dem Normbetriebspunkt eine Variation der Temperaturspreizung durchgeführt wird, und/oder
- der Sockelwert modellbasiert abgeleitet wird, wobei für die Ableitung des modellbasierten Sockelwertes insbesondere eine finite Elemente Simulation zum Erhalt von Abhängigkeiten anhand von Messdaten angewandt wird.

4. Verfahren nach einem der vorstehenden Ansprüche, wobei der Sollwert für die Temperaturspreizung bis zu einem Schwellwert der Vorlauftemperatur des Wärmesenkenkreises (400) konstant ist und insbesondere dem Sockelwert entspricht.

5. Verfahren nach Anspruch 4, wobei der Sollwert für die Temperaturspreizung über dem Schwellwert der Vorlauftemperatur als Funktion der Vorlauftemperatur ansteigt.

6. Verfahren nach einem der vorstehenden Ansprüche, wobei die Korrekturwerte ferner wenigstens einen der folgenden Korrekturwerte enthalten:
- Korrekturwert zur modellbasierten Einhaltung einer oberen Vorlauftemperatur-Betriebsgrenze, welcher unterhalb einer Grenz-Vorlauftemperatur den Wert = 0 hat und oberhalb der Grenz-Vorlauftemperatur proportional zur Differenz zu der Grenz-Vorlauftemperatur im Wert ansteigt;
- Korrekturwert zur modellbasierten Einhaltung einer unteren Vorlauftemperatur-Betriebsgrenze, welcher oberhalb einer weiteren Grenz-Vorlauftemperatur den Wert = 0 hat und unterhalb der weiteren Grenz-Vorlauftemperatur proportional zur Differenz zu der weiteren Grenz-Vorlauftemperatur im Wert ins Negative absinkt;
- Korrekturwert , welcher nach Berechnung nach einem oder beider der oben genannten Abhängigkeiten auf einen minimalen und / oder maximalen Grenzwert begrenzt wird.
- Korrekturwert, welcher mit Hilfe des Sockelwertes für den Sollwert der Temperaturdifferenz des Wärmesenkenmediums multipliziert mit einem Steuerfaktor eines Arbeitsbereichsreglers gebildet wird.

7. Verfahren nach einem der vorstehenden Ansprüche, wobei die Steuerung den Kältekreis derart regelt, dass das Kältemittel bei Austritt aus dem Verflüssiger eine Unterkühlung kleiner 3K, vorzugsweise kleiner 2K und besonders bevorzugt kleiner 1K aufweist.

8. Kompressionskälteanlage (200) mit
- einem Kältekreis mit
- einem Kältemittel,
- einem Verdampfer (240),
- einem Verdichter (210),
- einem Verflüssiger (220),
- einem Drosselorgan (230),
- einem internen Wärmeübertrager (250) zur Übertragung von Wärmeenergie des Kältemittels vor Eintritt in das Drosselorgan (230) an das Kältemittel vor Eintritt in den Verdichter (210),
- einem Wärmesenkenkreis (400), der zum Wärmeübertrag mit dem Verflüssiger (220) des Kältekreises ausgebildet ist,
- einer wärmesenkenseitigen Medienfördereinrichtung (410) und
- einer Steuereinheit (500) zur Regelung einer Temperaturdifferenz zwischen einer Vorlauftemperatur und einer Rücklauftemperatur des Wärmesenkenkreises (400), genannt Temperaturspreizung, mittels der Medienfördereinrichtung (410),
wobei die Steuereinheit (500) ausgebildet ist zum:
- Bilden eines Sockelwertes für die Temperaturspreizung, wobei der Sockelwert eine Effizienz des Kältekreises gewährleistet,
- Bilden wenigstens eines Korrekturwertes, wobei der oder die Korrekturwerte den Betrieb des Kältekreises in einem zulässigen Betriebsbereich gewährleisten,
- Addition des Sockelwertes und des oder der Korrekturwerte zu einem Sollwert für die Temperaturspreizung und
- Regeln der Medienfördereinrichtung (410) auf den Sollwert für die Temperaturspreizung.

9. Kompressionskälteanlage nach Anspruch 8, wobei das Kältemittel einen Temperaturglide aufweist, wobei als Kältemittel insbesondere R454C verwendet wird.

10. Wärmepumpe (100), insbesondere im Inneren eines Gebäudes aufgestellte Wärmepumpe (100), mit einer Kompressionskälteanlage (200) gemäß Anspruch 8 oder 9.

## Claims

1. A method of controlling a compression refrigeration system (200) comprising
- a refrigerant circuit comprising
- a refrigerant,
- an evaporator (240),
- a compressor (210),
- a condenser (220),
- a throttle valve (230),
- an internal heat exchanger (250) for transferring thermal energy of the refrigerant upstream of entry into the throttle valve (230) to the refrigerant upstream of entry into the compressor (210),
- a heat sink circuit (400) configured for exchanging heat with the condenser (220) of the refrigerant circuit,
- a heat sink side media conveying device (410), and
- a control unit (500) for controlling a temperature difference between a flow temperature and a return temperature of the heat sink circuit (400), referred to as temperature spread, via the media conveying device (410),
wherein the method includes the following steps:
- forming (1010) a base value for the temperature spread, the base value ensuring an efficiency of the refrigerant circuit,
- forming (1020) at least one correction value, the correction value(s) ensuring the operation of the refrigerant circuit within a permissible operating range,
- adding (1030) the base value and the correction value(s) to obtain a set value for the temperature spread, and
- controlling (1040) the media conveying device (410) to the set value for the temperature spread.

2. The method according to claim 1, wherein the step of forming at least one correction value includes:
- determining (1022) a pressure of the refrigerant within a high pressure section of the refrigerant circuit, referred to as high pressure,
- determining (1024) a maximum permissible high pressure at the current operating point of the compression refrigeration system,
- determining (1026) the correction value in dependence of a distance of the high pressure from the maximum permissible high pressure.

3. The method according to one of the preceding claims, wherein
- the base value is formed empirically by operating the compression refrigeration system at at least one standard operating point, wherein a variation of the temperature spread is performed during operation at the standard operating point, and/or
- the base value is derived based on a model, wherein in particular a finite element simulation for obtaining dependencies using measurement data is used to derive the model-based base value.

4. The method according to one of the preceding claims, wherein the set value for the temperature spread is constant up to a threshold value of the flow temperature of the heat sink circuit (400) and in particular corresponds to the base value.

5. The method according to claim 4, wherein, above the threshold value of the flow temperature, the set value for the temperature spread increases as a function of the flow temperature.

6. The method according to one of the preceding claims, wherein the correction values further contain at least one of the following correction values:
- a correction value for model-based compliance with an upper flow temperature operating limit, which, below a flow temperature limit, has the value = 0, and, above the flow temperature limit, has a value increasing proportionally to the difference to the flow temperature limit;
- a correction value for model-based compliance with a lower flow temperature operating limit, which, above a further flow temperature limit, has the value = 0, and, below the further flow temperature limit, has a value decreasing into the negative proportionally to the difference to the further flow temperature limit;
- a correction value, which, after calculation in accordance with one or both of the above dependencies, is limited to a minimum and/or a maximum limit value.
- a correction value, which is formed using the base value for the set value of the temperature difference of the heat sink medium, multiplied by a control factor of an operating range controller.

7. The method according to one of the preceding claims, wherein the control unit controls the refrigerant circuit such that the refrigerant, upon exiting the condenser, has a supercooling of less than 3 K, preferably less than 2 K and most preferably less than 1 K.

8. A compression refrigeration system (200) comprising
- a refrigerant circuit comprising
- a refrigerant,
- an evaporator (240),
- a compressor (210),
- a condenser (220),
- a throttle valve (230),
- an internal heat exchanger (250) for transferring thermal energy of the refrigerant upstream of entry into the throttle valve (230) to the refrigerant upstream of entry into the compressor (210),
- a heat sink circuit (400) configured for exchanging heat with the condenser (220) of the refrigerant circuit,
- a heat sink side media conveying device (410), and
- a control unit (500) for controlling a temperature difference between a flow temperature and a return temperature of the heat sink circuit (400), referred to as temperature spread, via the media conveying device (410),
wherein the control unit (500) is configured for:
- forming a base value for the temperature spread, wherein the base value ensures an efficiency of the refrigerant circuit,
- forming at least one correction value, the correction value(s) ensuring the operation of the refrigerant circuit within a permissible operating range,
- adding the base value and the correction value(s) to obtain a set value for the temperature spread, and
- controlling the media conveying device (410) to the set value for the temperature spread.

9. The compression refrigeration system according to claim 8, wherein the refrigerant has a temperature glide, wherein in particular R454C is used as the refrigerant.

10. A heat pump (100), in particular a heat pump (100) installed inside a building, comprising a compression refrigeration system (200) according to claim 8 or claim 9.

## Revendications

1. Procédé de régulation d'une installation de réfrigération à compression (200) comportant
- un circuit frigorifique comportant
- un fluide frigorigène,
- un évaporateur (240),
- un compresseur (210),
- un condenseur (220),
- un organe d'étranglement (230),
- un échangeur de chaleur (250) interne destiné à transmettre de l'énergie thermique du fluide frigorigène avant son entrée dans l'organe d'étranglement (230) au fluide frigorigène avant son entrée dans le compresseur (210),
- un circuit de dissipateur thermique (400) qui est conçu pour l'échange de chaleur avec le condenseur (220) du circuit frigorifique,
- un dispositif de transport de fluide (410) côté dissipateur de chaleur et
- une unité de commande (500) destinée à la régulation d'un écart de température, dit étalement de température, entre une température de départ et une température de retour du circuit de dissipateur de chaleur (400) au moyen du dispositif de transport de fluide (410),
le procédé comprenant les étapes suivantes :
- formation (1010) d'une valeur de base pour l'étalement de température, la valeur de base assurant une efficacité du circuit frigorifique,
- formation (1020) d'au moins une valeur de correction, la ou les valeurs de correction assurant le fonctionnement du circuit frigorifique dans une plage de fonctionnement admissible,
- addition (1030) de la valeur de base et de la ou des valeurs de correction pour obtenir une valeur de consigne pour l'étalement de température et
- régulation (1040) du dispositif de transport de fluide (410) à la valeur de consigne pour l'étalement de température.

2. Procédé selon la revendication 1, dans lequel l'étape de formation d'au moins une valeur de correction comprend :
- la détermination (1022) d'une pression du fluide frigorigène, dite haute pression, dans une partie haute pression du circuit frigorifique,
- la détermination (1024) d'une haute pression maximale admissible au point de fonctionnement actuel de l'installation de réfrigération à compression,
- la détermination (1026) de la valeur de correction en fonction d'un écart entre la haute pression et la haute pression maximale admissible.

3. Procédé selon l'une des revendications précédentes, dans lequel
- la valeur de base est formée de manière empirique par le fonctionnement de l'installation de réfrigération à compression à au moins un point de fonctionnement normal, une variation de l'étalement de température étant réalisée pendant le fonctionnement au point de fonctionnement normal, et/ou
- la valeur de base est dérivée sur la base d'un modèle, une simulation par éléments finis étant en particulier utilisée pour la dérivation de la valeur de base sur la base d'un modèle afin d'obtenir des dépendances, à l'aide de données de mesure.

4. Procédé selon l'une des revendications précédentes, dans lequel la valeur de consigne pour l'étalement de température est constante jusqu'à une valeur seuil de la température de départ du circuit de dissipateur de chaleur (400) et correspond en particulier à la valeur de base.

5. Procédé selon la revendication 4, dans lequel la valeur de consigne pour l'étalement de température augmente au-dessus de la valeur seuil de la température de départ en fonction de la température de départ.

6. Procédé selon l'une des revendications précédentes, dans lequel les valeurs de correction comprennent en outre au moins une des valeurs de correction suivantes :
- valeur de correction pour le respect, sur la base d'un modèle, d'une limite de fonctionnement supérieure de la température de départ, ladite valeur étant de = 0 en dessous d'une température limite de départ et augmentant, proportionnellement à la différence par rapport à la température limite de départ, au-dessus de la température de départ ;
- valeur de correction pour le respect, sur la base d'un modèle, d'une limite de fonctionnement inférieure de la température de départ, ladite valeur étant de = 0 au-dessus d'une autre température limite de départ et diminuant, proportionnellement à la différence par rapport à l'autre température limite de départ, en dessous de l'autre température de départ pour atteindre des valeurs négatives ;
- valeur de correction qui, après le calcul selon l'une des ou les deux dépendances susmentionnées, est limitée à une valeur limite minimale et/ou maximale ;
- valeur de correction qui est formée à l'aide de la valeur de base pour la valeur de consigne de l'écart de température du fluide dissipateur thermique multipliée par un facteur de commande d'un régulateur de plage de travail.

7. Procédé selon l'une des revendications précédentes, dans lequel la commande régule le circuit frigorifique de telle manière que le fluide frigorigène présente, à la sortie du condenseur, un sous-refroidissement inférieur à 3 K, de préférence inférieur à 2 K et de manière particulièrement préférée inférieur à 1 K.

8. Installation de réfrigération à compression (200) comportant
- un circuit frigorifique comportant
- un fluide frigorigène,
- un évaporateur (240),
- un compresseur (210),
- un condenseur (220),
- un organe d'étranglement (230),
- un échangeur de chaleur (250) interne destiné à transmettre de l'énergie thermique du fluide frigorigène avant son entrée dans l'organe d'étranglement (230) au fluide frigorigène avant son entrée dans le compresseur (210),
- un circuit de dissipateur thermique (400) qui est conçu pour l'échange de chaleur avec le condenseur (220) du circuit frigorifique,
- un dispositif de transport de fluide (410) côté dissipateur de chaleur et
- une unité de commande (500) destinée à la régulation d'un écart de température, dit étalement de température, entre une température de départ et une température de retour du circuit de dissipateur de chaleur (400) au moyen du dispositif de transport de fluide (410),
l'unité de commande (500) étant en outre conçue pour :
- former une valeur de base pour l'étalement de température, la valeur de base assurant une efficacité du circuit frigorifique,
- former au moins une valeur de correction, la ou les valeurs de correction assurant le fonctionnement du circuit frigorifique dans une plage de fonctionnement admissible,
- additionner la valeur de base et la ou les valeurs de correction pour obtenir une valeur de consigne pour l'étalement de température et
- réguler le dispositif de transport de fluide (410) à la valeur de consigne pour l'étalement de température.

9. Installation de réfrigération à compression selon la revendication 8, dans laquelle le fluide frigorigène présente un glissement de température, le fluide frigorigène utilisé étant de préférence du R454C.

10. Pompe à chaleur (100), en particulier pompe à chaleur (100) installée à l'intérieur d'un bâtiment, comportant une installation de réfrigération à compression (200) selon la revendication 8 ou 9.
